# FASCICULE DE BREVET EUROPEEN

(11) **EP 1 464 249 B1**
(45) Date de publication et mention de la délivrance du brevet: **14.12.2005**
(21) Numéro de dépôt: 04290882.2
(22) Date de dépôt: 02.04.2004
(51) Int. Cl.: A45D 40/22

(54) **Conteneur destiné au conditionnement d'un produit, notamment cosmetique, comprenant au moins un constituant volatil et procedé de realisation**
Kontainer für ein Produkt, zum Beispiel ein kosmetisches Produckt, mit mindestens einem flüchtigen Bestandteil und Verfahren zur Herstellung
Container for a product, for example a cosmetic, comprising at least a volatile component and manufacturing process

(30) Priorité: 04.04.2003 FR 0304244
(43) Date de publication de la demande: 06.10.2004
(73) Titulaire: Axilone Plastique, 56520 Guidel (FR)
(72) Inventeur: Heraud, Anthony, 56400 Auray (FR)
(74) Mandataire: Derambure, Christian

(56) Documents cités:
- US-A- 4 018 237
- US-A- 4 569 438
- US-A- 5 092 354
- US-B1- 6 240 930

## Description

L'invention concerne un conteneur prêt à être rempli destiné au conditionnement d'un produit, notamment cosmétique, comprenant au moins un constituant volatil et/ou altérable à l'air, le conteneur comprenant un corps de base et un couvercle, le corps de base comprenant un godet destiné à recevoir le produit, le couvercle comprenant des moyens de fermeture du godet.

L'invention concerne également un procédé de réalisation d'un tel conteneur.

L'invention concerne en outre un conteneur de conditionnement d'un produit, notamment cosmétique, comprenant un conteneur prêt à être rempli, ainsi que le procédé de réalisation d'un tel conteneur.

Les produits cosmétiques sous forme pâteuse comportent des produits volatils et/ou altérables à l'air et sont placés dans un godet. Pour conserver le produit au cours du temps, il est nécessaire de le conditionner dans un récipient, tel qu'un godet, ne permettant pas à ses composants volatils de s'échapper vers l'extérieur. Le godet doit également empêcher l'air de pénétrer et d'altérer le produit.

Le matériau utilisé pour le fond, les parois latérales et le couvercle du conteneur répond aux critères de conservation du produit.

En position fermée du conteneur, le passage de matière vers l'extérieur ou d'air dans le conteneur ne peut alors se faire que par l'intermédiaire des moyens de fermeture du conteneur, à savoir entre le haut de la paroi latérale du godet et le couvercle.

Pour empêcher ce passage on utilise couramment des joints assurant l'étanchéité du godet.

Ces joints sont réalisés dans une matière souple et étanche. Ces joints sont généralement collés ou fixés à force sur le couvercle. Ils comprennent une lèvre venant en contact avec la paroi latérale du godet.

Toutefois, en position fermée du conteneur, la lèvre n'établit qu'un contact linéaire avec la paroi latérale. Une déformation ou un déplacement de la lèvre au cours du temps prive alors le godet de l'étanchéité nécessaire.

De plus, on constate au cours du temps des problèmes de centrage lors de la fermeture du conteneur.

Le document US-6 240 930 décrit une boîte comprenant un conteneur inférieur et un couvercle. Une pièce de garniture pourvue d'un bourrelet est associée à une paroi circulaire s'étendant depuis le fond du conteneur inférieur. En position fermée, une paroi circulaire, s'étendant depuis la face inférieure du couvercle et entourant la pièce de garniture, forme avec le bourrelet un joint d'étanchéité.

Le joint n'est pas monté sur la surface inférieure de la jupe coiffante et ne s'étend sur toute la surface intérieure de la jupe coiffante pour, en position fermée, remplir l'espace formé entre la jupe coiffante et la paroi du godet.

Le document US-4 569 438 prévoit qu'un joint torique puisse être disposé dans la rainure d'une paroi s'étendant vers le bas depuis un couvercle et agencée autour d'une paroi s'étendant vers le haut depuis un élément de base. Toutefois, ce joint ne s'étend pas sur toute la surface intérieure de la jupe coiffante.

L'objet de la présente invention est de remédier aux inconvénients précédents à l'aide d'un joint établissant une zone de contact étendu avec au moins une surface en saillie du fond du couvercle et encerclant la paroi du godet.

A cet effet, l'invention propose un conteneur prêt à être rempli destiné au conditionnement d'un produit, notamment cosmétique, comprenant au moins un constituant volatil et/ou altérable à l'air, le conteneur comprenant un corps de base et un couvercle en matière plastique, le conteneur pouvant être en position fermée lorsque le couvercle recouvre le corps ou en position ouverte, le corps comprenant au moins un godet destiné à recevoir le produit, le godet comprenant un fond et une paroi latérale en saillie du fond, le couvercle comprenant un fond et une jupe coiffante en saillie du fond, la paroi latérale et la jupe coiffante ayant des formes complémentaires et étant écartées l'une de l'autre de sorte, en position fermée du conteneur, à créer un espace dans lequel un joint d'étanchéité est disposé, le joint étant enserré, lorsque le conteneur est en position fermée, entre la paroi latérale et la jupe coiffante, la forme et les dimensions du joint (18) étant, au niveau de l'espace entre la paroi latérale (8) et la jupe coiffante (15), équivalentes à la forme et aux dimensions dudit espace de sorte que le joint (18) présente une surface de contact étendue avec au moins la jupe coiffante (15).

Dans un mode de réalisation particulier, le joint est monté sur la surface intérieure de la jupe coiffante en s'étendant sensiblement sur toute ladite surface intérieure.

La position du joint sur la surface intérieure de la jupe coiffante permet d'assurer le centrage de la jupe coiffante sur le godet à chaque fermeture du conteneur.

En variante, le joint est monté sur la surface extérieure de la paroi latérale en s'étendant sensiblement sur toute la surface extérieure d'une portion supérieure de ladite paroi latérale, ladite portion étant sensiblement en regard de la jupe coiffante.

Par ailleurs, le joint d'étanchéité peut être en matière plastique plus souple que la matière plastique du couvercle et du fond et/ou du godet.

Selon une réalisation, le godet et la jupe peuvent avoir une géométrie de révolution.

Le corps et le couvercle peuvent être articulés par des moyens formant charnière.

L'invention propose également un procédé de réalisation d'un conteneur prêt à être rempli tel que précédemment décrit dans lequel le joint d'étanchéité est monté sur la jupe coiffante.

Le procédé comprend les étapes suivantes :
- on injecte la matière plastique pour former le fond et la jupe du couvercle, dans un moule comprenant une partie fixe et une partie mobile , la partie mobile étant déplaçable entre deux positions, une première position de moulage du fond et de la jupe du couvercle dans laquelle la partie mobile occupe l'espace destiné à être rempli par le joint et une position de moulage du joint dans laquelle la partie mobile libère ledit espace ;
- on déplace la partie mobile dans sa deuxième position ;
- on injecte la matière plastique pour former le joint.

Dans un mode de réalisation, on peut injecter la matière plastique pour former le fond et la jupe du couvercle par l'intermédiaire d'un premier point d'injection et injecter la matière plastique pour former le joint par l'intermédiaire d'un deuxième point d'injection.

L'invention concerne également un procédé de réalisation d'un conteneur prêt à être rempli tel que précédemment décrit dans lequel le joint d'étanchéité est monté sur la paroi latérale du godet.

Le procédé comprend les étapes suivantes :
- on injecte la matière plastique pour former le fond et la paroi latérale du godet, dans un moule comprenant une partie fixe et une partie mobile, la partie mobile étant déplaçable entre deux positions, une première position de moulage du fond et de la paroi latérale du godet dans laquelle la partie mobile occupe l'espace destiné à être rempli par le joint et une position de moulage du joint dans laquelle la partie mobile libère ledit espace ;
- on déplace la partie mobile dans sa deuxième position ;
- on injecte la matière plastique pour former le joint.

Selon une réalisation, on injecte la matière plastique pour former le fond et la paroi latérale du godet à l'aide d'un premier point d'injection et l'on injecte la matière plastique pour former le joint à l'aide d'un deuxième point d'injection.

L'invention propose également un conteneur de conditionnement d'un produit, notamment cosmétique, comprenant au moins un constituant volatil et/ou altérable à l'air. Le procédé comprend un conteneur prêt à être rempli tel que décrit précédemment et un produit disposé dans le godet.

L'invention propose en outre un procédé de réalisation d'un conteneur de conditionnement d'un produit, notamment cosmétique.

Le procédé comprend les étapes suivantes :
- on se procure un conteneur prêt à être rempli tel que précédemment décrit ;
- on coule le produit dans le godet.

Le procédé peut comprendre en outre l'étape consistant à mettre le conteneur en position fermée.

D'autres particularités de l'invention résulteront de la description qui va suivre, en référence aux dessins annexés, donnés à titre d'exemples non limitatifs.

La figure 1 représente un conteneur prêt à être rempli selon l'invention, en position ouverte, et représenté selon une vue en perspective.

La figure 2 représente le conteneur de la figure 1, en perspective, en position fermée.

La figure 3 représente une vue en coupe du conteneur selon l'axe 3-3 de la figure 2.

La figure 4 représente une vue agrandie du godet, de la jupe coiffante et du joint tels que représentés sur la figure 3.

La figure 5 représente une vue agrandie du détail A de la figure 3.

La figure 6 représente une vue agrandie du détail B de la figure 4.

La figure 7 représente schématiquement une vue en coupe de l'appareillage d'injection de matière plastique en position de moulage du fond et de la jupe du couvercle.

La figure 8 représente schématiquement une vue en coupe de l'appareillage d'injection de matière plastique en position de moulage du joint selon l'invention.

La figure 9 représente un conteneur prêt à être rempli selon un autre mode de réalisation de l'invention, en position ouverte, et représenté selon une vue en perspective.

La figure 10 représente le conteneur de la figure 9, en perspective, en position fermée.

La figure 11 représente une vue en coupe du conteneur selon l'axe 11-11 de la figure 10.

La figure 12 représente une vue agrandie du détail C de la figure 11.

La figure 13 représente un conteneur prêt à être rempli selon un autre mode de réalisation de l'invention, en position ouverte, et représenté selon une vue en perspective.

La figure 14 représente une vue en coupe longitudinale du conteneur, en position fermée, de la figure 13.

Les figures 15 représentent des vues agrandies de différents modes de réalisation du détail D de la figure 14.

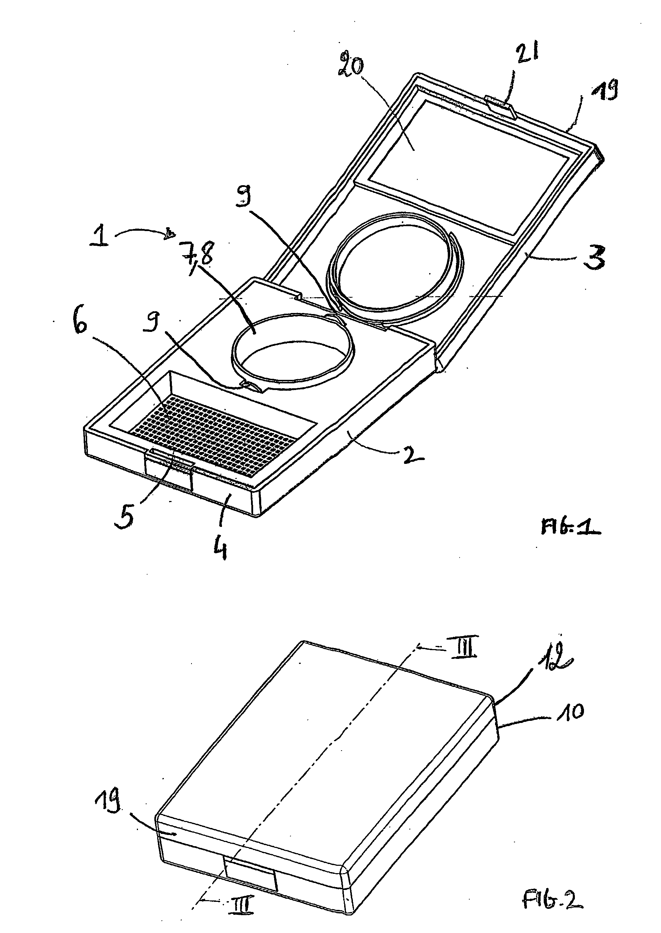

Le conteneur 1 comprend un corps de base 2 et un couvercle 3 comme on le voit sur les figures 1, 2. Le corps de base 2 et le couvercle 3 sont articulés l'un à l'autre à l'aide de moyens formant charnière non représentés.

Le corps de base 2 est en matière plastique rigide. La matière plastique utilisée est un polymère tel que le polypropylène, le polystyrène ou autre.

Le corps 2 est parallélépipédique et présente une épaisseur très inférieure aux largeur et longueur du corps 2. Le corps 2 présente une face extérieure et une face intérieure, rectangulaires.

Dans un autre mode de réalisation, le corps 2 peut présenter une forme autre que parallélépipédique.

La face extérieure est pleine.

Lorsque le conteneur 1 est complet, la face intérieure n'est visible qu'en position ouverte du conteneur 1. Les faces intérieure et extérieure sont délimitées par quatre côtés formant les quatre autres faces du parallélépipède.

Sur un premier côté en largeur 4, et sur toute son épaisseur, le corps 2 comprend un fermoir 5 situé sensiblement au milieu du bord 4. Le fermoir 5 comprend une fente située légèrement en retrait du bord 4 et des moyens d'encliquetage, à l'intérieur de la fente, d'une langue placée sur le couvercle 3 et destinée à venir s'encliqueter dans la fente à l'aide des moyens d'encliquetage.

Outre le fermoir 5, la face intérieure comprend une ouverture rectangulaire ouvrant sur un évidement rectangulaire 6 s'étendant sur sensiblement toute la largeur du corps 2 et sur une petite moitié de la longueur du corps 2.

L'évidement 6 présente quatre parois latérales réalisés d'une pièce avec la face intérieure.

En variante, la face intérieure peut comprendre une ouverture ouvrant sur un évidemment d'une forme autre que rectangulaire comme cela est représenté sur la figure 9.

La face intérieure n'est formée, dans cette zone que d'une bande étroite. L'épaisseur de cet évidement 6 est légèrement inférieure à l'épaisseur du corps 2.

En s'éloignant du côté 4, après l'évidement 6, la face intérieure présente une deuxième ouverture, circulaire et destinée à accueillir un godet 7, également circulaire. Le godet 7 est ici amovible.

Dans un mode de réalisation non représenté, le godet 7 peut présenter une forme autre que circulaire, par exemple rectangulaire, ovale, ou autre.

Le godet 7, en matière plastique rigide présente une paroi latérale 8 d'une hauteur comparable à celle des bords du corps 2 et faisant légèrement saillie au dessus du niveau de la face intérieure. Le godet 7 comprend également des moyens de fixation au corps 2 sous la forme de saillies s'étendant depuis le fond du godet parallèlement à la paroi latérale 8. Dans le mode de réalisation représenté, les moyens de fixation sont déformables et comprennent des moyens d'encliquetage 9 prévus afin de fixer de façon amovible le godet 7 au corps 3. Les moyens d'encliquetage 9 sont diamétralement opposés, l'un situé vers le bord 4, l'autre vers le côté 10 opposé au côté 4. Le volume intérieur au godet 7 permet d'accueillir le produit cosmétique (non représenté).

La face intérieure, la face extérieure et les côtés du corps 2 sont réalisés d'une pièce mais peuvent être réalisés en plusieurs pièces.

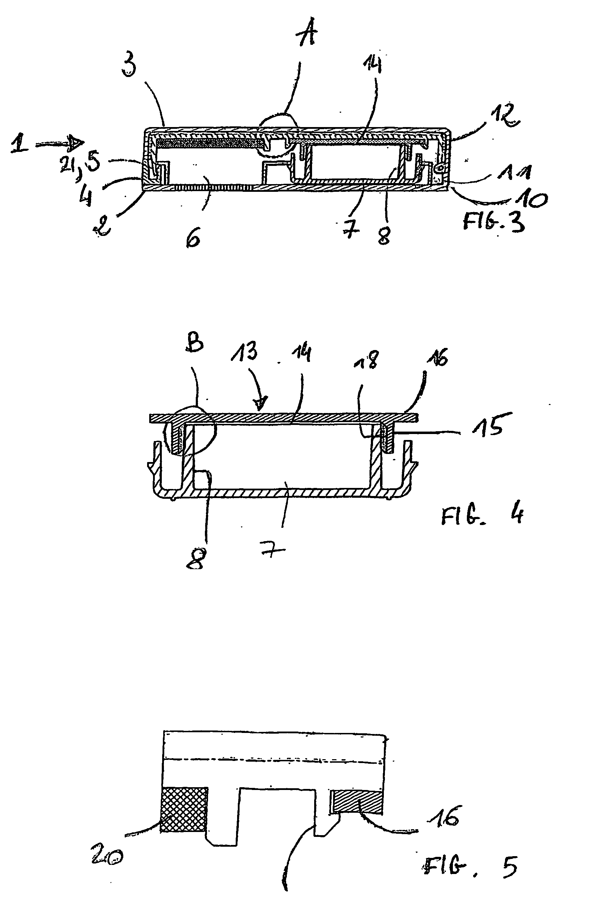

Le long de son côté 10, le corps 2 est articulé au couvercle 3 à l'aide de moyens d'articulations 11 comme on le voit sur la figure 3.

Dans un mode de réalisation non représenté, les moyens d'articulation 11 sont situés dans le plan de la face extérieure du corps 2, le corps 2 n'ayant pas de côté 10.

Le couvercle 3 est parallélépipédique et présente une face extérieure et une face intérieure, rectangulaires.

La face extérieure est pleine.

Lorsque le conteneur 1 est complet, la face intérieure n'est visible qu'en position ouverte du conteneur 1. Les faces intérieure et extérieure sont délimitées par quatre côtés formant les quatre autres faces du parallélépipède.

Les dimensions du couvercle 3 (longueur et largeur) correspondent à celle du corps 2. Le couvercle 3 est moins épais que le corps 2.

Le couvercle 3 est en matière plastique rigide tel que le polypropylène.

Selon une réalisation, le corps 2 et le couvercle 3 peuvent être réalisés dans des matériaux autres et dans des matériaux différents pour le corps 2 et pour le couvercle 3.

Le couvercle 3 est articulé au corps 2 selon un côté 12.

La face intérieure comprend deux zones. La première zone située du côté du côté 12 présente un bouchon 13 de forme correspondant à celle du godet 7, ici cylindrique.

Comme on le voit notamment sur la figure 4, le bouchon 13 comprend un fond 14 fixé rigidement à la face intérieure du couvercle 3 et une jupe 15 en saillie du fond 14, le diamètre de la jupe étant prévu pour que bouchon 13 encercle la paroi latérale 8 du godet 7 lorsque que le conteneur 1 est fermé. Ainsi, la paroi latérale 8 et la jupe coiffante 15 ont des formes complémentaires et sont écartées l'une de l'autre de sorte, en position fermée du conteneur 1, à créer un espace entre elles.

Le bouchon 13 est en matière plastique rigide.

Dans un mode de réalisation non représenté, la jupe 15 est en saillie directement de la face intérieure du couvercle 3 et ne forme qu'une seule pièce avec le couvercle 3.

Dans le plan du fond 14 du bouchon 13, le bouchon 13 présente un débordement 16 radial par rapport à la paroi latérale.

Le bouchon 13 est fixé rigidement à la face intérieure du couvercle 3 à l'aide de moyens de fixation 17.

Comme on le voit sur la figure 5, ces moyens 17 s'étendent selon deux arcs de cercle dont la section a une forme de crochet permettant de coincer le débordement 16. Les arcs de cercle entourent la paroi 15 à l'exception de deux petites zones diamétralement opposées, l'une des deux zones étant située sensiblement contre le côté 12.

Afin d'assurer l'étanchéité recherchée du conteneur 1 en position fermée et le centrage de la jupe 15 sur la paroi latérale 8 à chaque fermeture, un joint d'étanchéité 18 en matière plastique souple est disposé dans l'espace formé entre la jupe coiffante 15 et la paroi latérale 8. En particulier, la forme et les dimensions du joint 18 sont, au niveau de l'espace entre la paroi latérale 8 et la jupe coiffante 15, équivalentes à la forme et aux dimensions dudit espace entre la paroi latérale 8 et la jupe coiffante 15 de sorte que le joint 18 présente une surface de contact étendue avec au moins la jupe coiffante 15 lorsqu'il est enserré entre la paroi latérale 8 et la jupe coiffante 15.

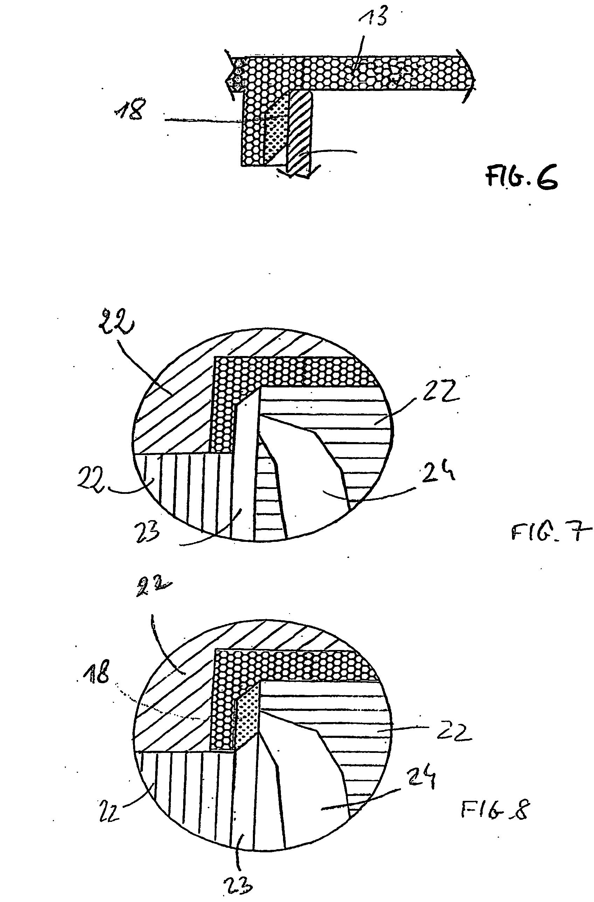

Ainsi, comme on le voit sur les figures 3, 4 et 6, le bouchon 13 porte, sur l'intérieur de sa paroi 15, le joint 18 qui s'étend contre sensiblement la totalité de la surface intérieure de la jupe 15 selon un cylindre dont l'épaisseur est équivalente à la distance entre la surface intérieure de la jupe 15 et la surface extérieure de la paroi latérale 8 du godet 7.

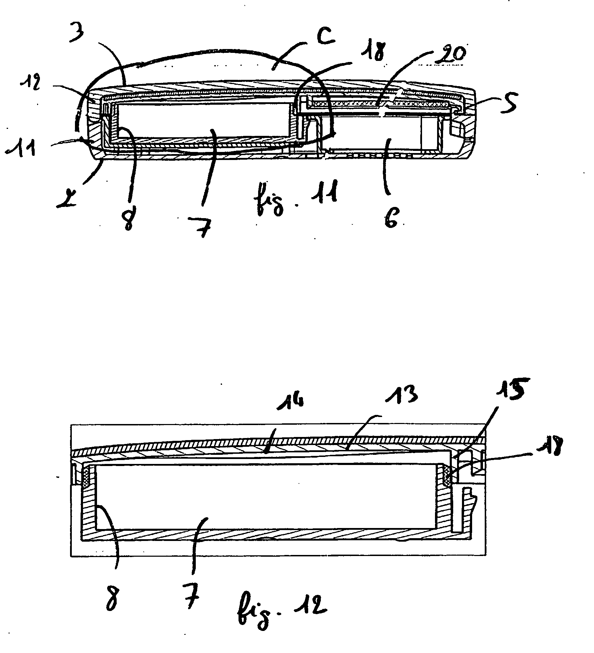

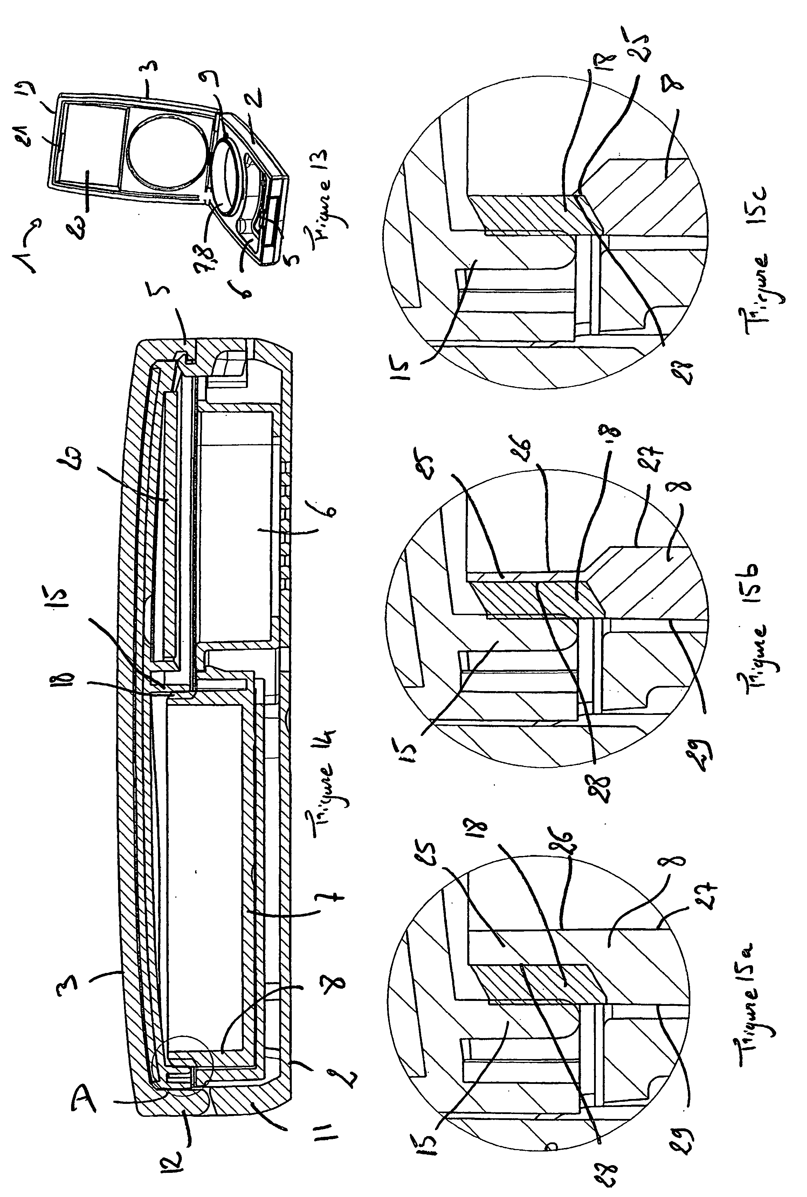

En variante représentée sur les figures 9 à 15, le joint 18 est monté sur la surface extérieure de la paroi latérale 8 en s'étendant sensiblement sur toute la surface extérieure 28 d'une portion supérieure 25 de ladite paroi latérale, ladite portion étant sensiblement en regard de la jupe coiffante 15.

Différents modes de réalisation de cette portion supérieure 25 sur laquelle le joint 18 peut être monté sont représentés sur les figures 15a, 15b et 15c. En particulier, la portion supérieure 25 peut présenter une épaisseur inférieure à l'épaisseur du reste de la paroi latérale 8.

Sur la figure 15a, la portion supérieure 25 est réalisée de sorte que la somme des épaisseurs de la portion 25 et du joint 18 soit sensiblement égale à l'épaisseur du reste de la paroi latérale 8. La surface intérieure 26 de la portion supérieure 25 est située dans le prolongement de la surface intérieure 27 du reste de la paroi latérale 8. En revanche, la surface extérieure 28 de la portion supérieure 25 est réalisée en retrait par rapport à la surface extérieure 29 du reste de la paroi latérale 8. L'épaisseur de la portion supérieure 25 est alors par exemple voisine de la moitié de l'épaisseur du reste de la paroi latérale 8.

Sur la figure 15b, la portion supérieure 25 est réalisée de sorte que la somme des épaisseurs de la portion 25 et du joint 18 soit inférieure à l'épaisseur du reste de la paroi latérale 8. Les surfaces intérieure 26 et extérieure 28 de la portion supérieure 25 sont réalisées en retrait par rapport aux surfaces intérieure 27 et extérieure 29 du reste de la paroi latérale 8. L'épaisseur de la portion supérieure 25 est alors par exemple comprise entre le tiers et le dixième de l'épaisseur du reste de la paroi latérale 8.

D'autre part, la portion supérieure 25 peut être réduite à une portée telle que représentée sur la figure 15c. Au niveau de l'espace entre la surface extérieure 28 de la portion supérieure 25 et la surface intérieure de la jupe coiffante 15, la forme et les dimensions du joint 18 sont équivalentes à la forme et aux dimensions dudit espace. Toutefois, afin d'assurer l'étanchéité et le centrage, on prévoit que le joint 18 s'étende au-delà de l'espace entre la paroi latérale 8 et la jupe coiffante 15 et qu'il présente une surface de contact étendue avec la jupe coiffante 15. Sur la figure 15c, le joint 18 s'étend verticalement.

Ces différents modes de réalisation permettent, en jouant sur la géométrie du godet 7 et, en particulier, sur la géométrie de la portion supérieure 25, d'augmenter les tolérances de fabrication. Par ailleurs, en diminuant l'épaisseur de la portion supérieure 25 ou en la réduisant à une portée, on améliore la flexibilité de la paroi latérale 8 du godet 7 au niveau du joint 18. Cette flexibilité présente de nombreux avantages notamment concernant le centrage de la jupe 15 sur la paroi latérale 8.

Par ailleurs, afin d'améliorer ce centrage de la jupe 15 sur la paroi latérale 8, on prévoit que les faces supérieure et inférieure du joint d'étanchéité 18 soient parallèles et inclinées de sorte que la face extérieure du joint 18 est décalée vers le bas par rapport à la face intérieure du joint 18. De ce fait lorsque le couvercle 3 est rabattu sur corps 2, l'extrémité inférieure de la jupe 15 entre en contact avec la face supérieure inclinée du joint 18 et peut glisser le long de celle-ci. Les moyens de fixation déformables du godet 7 permettent alors d'assurer le bon positionnement relatif du godet 7 par rapport au bouchon 13.

Dans un autre mode de réalisation, lorsque les moyens de fixation du godet 7 ne sont pas déformables par exemple, on peut prévoir que le fond 14 du bouchon 13 soit monté avec un jeu entre les moyens de fixation 17 de sorte que à ajuster le positionnement relatif de la jupe coiffante 15 et du godet 7 lors du glissement de l'extrémité de la jupe coiffante 15 sur la face supérieure du joint 18.

La deuxième zone de face intérieure du couvercle 3, dont le niveau est légèrement au dessus de celui de la première zone, s'étend sensiblement à partir du bouchon jusqu'au côté 19 opposé au côté 12.

Cette zone est rectangulaire et comprend un miroir 20 rectangulaire dont les dimensions sont légèrement inférieures à celles de l'autre zone de face intérieure. Selon le mode de réalisation représenté sur la figure 5, le miroir 20 est fixé à la face par collage. Toutefois, on peut assurer cette fixation par tout moyen qui convient, notamment par collage.

Lorsque le conteneur 1 est en position fermée, le miroir 20 est situé en regard de l'évidement 6.

Entre le miroir 20 et le côté 19, la face intérieure comprend en saillie une langue 21 rectangulaire dont les dimensions correspondent à celles du fermoir 5. La langue 21 est destinée à venir s'insérer dans le fermoir 5 lorsque le conteneur 1 est en position fermée. La langue 21 présente ainsi sur son extrémité la plus éloignée de la face intérieure du couvercle 3 un petit décrochement formant moyens d'encliquetage dans le fermoir 5.

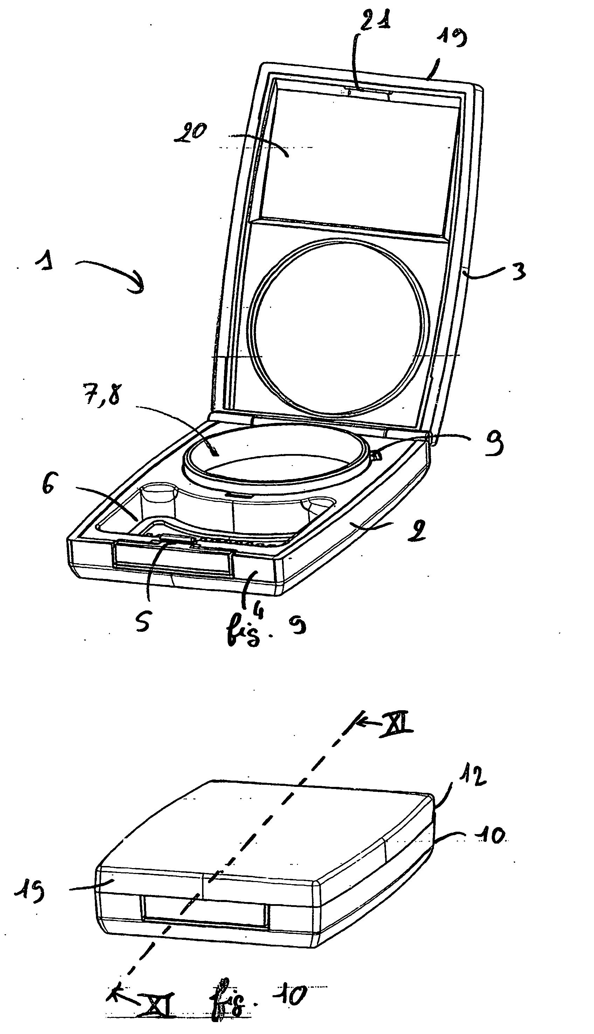

En référence aux figures 7 et 8, on décrit le moulage du joint 18 sur le bouchon 13 dans un moule commun.

Le moule utilisé comprend plusieurs parties de moule et deux points d'injection de matière plastique. Le moule comprend une partie fixe 22 pendant le moulage et une partie mobile 23. Le moule présente la même géométrie que le godet 7 et le bouchon 13, une géométrie de révolution dans le mode représenté.

La partie mobile 23 est déplaçable entre une première position dans laquelle elle est en contact avec et sur toute la surface de la face intérieure de la jupe coiffante 15 et une deuxième position dans laquelle elle n'établit plus qu'un contact linéaire avec l'extrémité de la face intérieure de la jupe coiffante 15 opposée au fond 14.

Lorsque la partie mobile 23 est dans sa première position, le moule présente une cavité correspondant à la forme du bouchon 13. Un premier point d'injection, non représenté, permet d'injecter la matière plastique pour mouler le bouchon 13, à savoir le fond 14 et la jupe 15. Ce premier point est par exemple situé au centre de la cavité.

Lorsque la partie mobile 23 est dans sa deuxième position et que le bouchon est moulé, le moule présente une cavité correspondant à la forme du joint 18. Un deuxième point d'injection 24 débouchant dans cette cavité est ménagé dans la partie de moule fixe 22 et permet d'injecter la matière plastique pour mouler le joint 18.

Le point d'injection 24 ne peut permettre l'injection de matière que lorsque la partie mobile 23 est dans sa deuxième position.

Afin de mouler le bouchon 13 pourvu du joint 18, l'ensemble étant ensuite encliqueté au couvercle 3 à l'aide des moyens d'encliquetage 17 :
- on place la partie mobile 23 dans sa première position ;
- on injecte la matière plastique par le premier point d'injection.

Après un temps de refroidissement choisi pour permettre une fixation optimale du joint 18 sur le bouchon 13, on déplace la partie mobile 23 dans sa deuxième position.

On injecte alors la matière plastique pour former le joint 18 sur le bouchon 13. Après refroidissement, on retire le bouchon pourvu du joint pour terminer la fabrication du couvercle 3.

Selon une réalisation, on replace la partie mobile 23 dans la première position.

Le couvercle 3 est obtenu en fixant le bouchon 13 et le miroir 20.

De manière similaire, le joint 18 peut être moulé sur la paroi latérale 8 du godet 7.

Pour ce faire, on injecte la matière plastique à l'aide d'un premier point d'injection pour former le fond et la paroi latérale 8 du godet 7, dans un moule comprenant une partie fixe et une partie mobile, la partie mobile étant déplaçable entre deux positions, une première position de moulage du fond et de la paroi latérale 8 du godet 7 dans laquelle la partie mobile occupe l'espace destiné à être rempli par le joint 18 et une position de moulage du joint 18 dans laquelle la partie mobile libère ledit espace ;
- on déplace la partie mobile dans sa deuxième position;
- on injecte à l'aide d'un deuxième point d'injection la matière plastique pour former le joint 18.

Ensuite, le corps 2 et le couvercle 3 sont articulés l'un à l'autre. On obtient alors le conteneur prêt à être rempli 1.

Vient ensuite l'étape de remplissage du godet 7 dans laquelle on coule le produit à conditionner dans le godet 7.

Selon une réalisation, on ferme le couvercle 3 sur le corps de base 2.

On obtient alors le conteneur prêt à être utilisé.

## Revendications

1. Conteneur prêt à être rempli (1) destiné au conditionnement d'un produit, notamment cosmétique, comprenant au moins un constituant volatil et/ou altérable à l'air, le conteneur (1) comprenant un corps de base (2) et un couvercle (3) en matière plastique, le conteneur (1) pouvant être en position fermée lorsque le couvercle (3) recouvre le corps (2) ou en position ouverte, le corps (2) comprenant au moins un godet (7) destiné à recevoir le produit, le godet (7) comprenant un fond et une paroi latérale (8) en saillie du fond, le couvercle (3) comprenant un fond (14) et une jupe coiffante (15) en saillie du fond, la paroi latérale (8) et la jupe coiffante (15) ayant des formes complémentaires et étant écartées l'une de l'autre de sorte, en position fermée du conteneur (1), à créer un espace dans lequel un joint d'étanchéité (18) est disposé, le joint (18) étant enserré, lorsque le conteneur (1) est en position fermée, entre la paroi latérale (8) et la jupe coiffante (15), **caractérisé en ce que** la forme et les dimensions du joint (18) sont, au niveau de l'espace entre la paroi latérale (8) et la jupe coiffante (15), équivalentes à la forme et aux dimensions dudit espace de sorte que le joint (18) présente une surface de contact étendue avec au moins la jupe coiffante (15).

2. Conteneur selon la revendication 1, **caractérisé en ce que** le joint (18) est monté sur la surface intérieure de la jupe coiffante (15) en s'étendant sensiblement sur toute ladite surface intérieure.

3. Conteneur selon la revendication 1, **caractérisé en ce que** le joint (18) est monté sur la surface extérieure de la paroi latérale (8) en s'étendant sensiblement sur toute la surface extérieure (28) d'une portion supérieure (25) de ladite paroi latérale, ladite portion étant sensiblement en regard de la jupe coiffante (15).

4. Conteneur selon la revendication 3, **caractérisé en ce que** la portion supérieure (25) présente une épaisseur inférieure à l'épaisseur de la paroi latérale (8).

5. Conteneur selon l'une quelconque des revendications 1 à 4, **caractérisé en ce que** les faces supérieure et inférieure du joint d'étanchéité (18) sont parallèles, lesdites faces supérieure et inférieure étant inclinées de sorte que la face extérieure du joint (18) est décalée vers le bas par rapport à la face intérieure du joint (18).

6. Conteneur (1) selon l'une quelconque des revendications 1 à 5, **caractérisé en ce que** le joint d'étanchéité (18) est en matière plastique plus souple que la matière plastique de la jupe (15), du fond (14) et/ou du godet (7).

7. Conteneur (1) selon l'une quelconque des revendications 1 à 6, **caractérisé en ce que** le godet (7) et la jupe (15) ont une géométrie de révolution.

8. Conteneur (1) selon l'une quelconque des revendications 1 à 7, **caractérisé en ce que** le godet (7) comprend des moyens de fixation au corps 2, lesdits moyens étant déformables de sorte à permettre le centrage de la jupe coiffante sur le godet.

9. Conteneur (1) selon la revendication 8, **caractérisé en ce que** les moyens de fixation comprennent des saillies s'étendant depuis le fond du godet parallèlement à la paroi latérale (8), formant moyens d'encliquetage (9).

10. Conteneur (1) selon l'une quelconque des revendications 1 à 9, **caractérisé en ce que** le godet (7) est amovible.

11. Conteneur (1) selon l'une quelconque des revendications 1 à 10, **caractérisé en ce que** le corps (2) et le couvercle (3) sont articulés par des moyens formant charnière.

12. Conteneur (1) selon l'une quelconque des revendications 1 à 11, **caractérisé en ce que** le couvercle (3) comprend en outre un miroir (20).

13. Procédé de réalisation d'un conteneur (1) prêt à être rempli selon l'une quelconque des revendications 5 à 12 lorsqu'elle dépend de la revendication 2, **caractérisé en ce qu'**il comprend les étapes suivantes :
- on injecte la matière plastique pour former le fond (14) et la jupe (15) du couvercle (3), dans un moule comprenant une partie fixe (22) et une partie mobile (23), la partie mobile (23) étant déplaçable entre deux positions, une première position de moulage du fond (14) et de la jupe (15) du couvercle (3) dans laquelle la partie mobile (23) occupe l'espace destiné à être rempli par le joint (18) et une position de moulage du joint (18) dans laquelle la partie mobile (23) libère ledit espace ;
- on déplace la partie mobile (23) dans sa deuxième position
- on injecte la matière plastique pour former le joint (18).

14. Procédé selon la revendication 13, **caractérisé en ce que** l'on injecte la matière plastique pour former le fond (14) et la jupe (15) du couvercle (3) à l'aide d'un premier point d'injection et l'on injecte la matière plastique pour former le joint (18) à l'aide d'un deuxième point d'injection (24).

15. Procédé de réalisation d'un conteneur (1) prêt à être rempli selon l'une quelconque des revendications 4 à 12 lorsqu'elle dépend de la revendication 3, **caractérisé en ce qu'**il comprend les étapes suivantes :
- on injecte la matière plastique pour former le fond et la paroi latérale (8) du godet (7), dans un moule comprenant une partie fixe et une partie mobile, la partie mobile étant déplaçable entre deux positions, une première position de moulage du fond et de la paroi latérale (8) du godet (7) dans laquelle la partie mobile occupe l'espace destiné à être rempli par le joint (18) et une position de moulage du joint (18) dans laquelle la partie mobile libère ledit espace ;
- on déplace la partie mobile dans sa deuxième position ;
- on injecte la matière plastique pour former le joint (18).

16. Procédé selon la revendication 15, **caractérisé en ce que** l'on injecte la matière plastique pour former le fond et la paroi latérale (8) du godet (7) à l'aide d'un premier point d'injection et l'on injecte la matière plastique pour former le joint (18) à l'aide d'un deuxième point d'injection.

17. Conteneur de conditionnement d'un produit, notamment cosmétique, comprenant au moins un constituant volatil et/ou altérable à l'air, **caractérisé en ce qu'**il comprend un conteneur prêt à être rempli (1) selon l'une des revendications 1 à 12 et un produit disposé dans le godet (7).

18. Procédé de réalisation d'un conteneur de conditionnement d'un produit, notamment cosmétique, selon la revendication 17, **caractérisé en ce qu'**il comprend les étapes suivantes :
- on se procure un conteneur prêt à être rempli selon l'une des revendications 1 à 12 ;
- on coule le produit dans le godet ;

19. Procédé selon la revendication 18, **caractérisé en ce qu'**il comprend en outre l'étape consistant à mettre le conteneur en position fermée.

## Patentansprüche

1. Zur Verpackung eines insbesondere kosmetischen Produkts bestimmter, zum Befüllen bereiter Behälter mit wenigstens einem flüchtigen und / oder an der Luft veränderlichen Bestandteil, wobei der Behälter (1) einen Basiskörper (2) und einen Deckel (3) aus Plastik umfasst, wobei der Behälter (1) in geschlossener Position sein kann, wenn der Deckel (3) den Körper (2) abdeckt oder in offener Position, wobei der Körper (2) wenigstens einen zur Aufnahme des Produkts bestimmten Napf (7) umfasst, wobei der Napf (7) einen Boden und eine vom Boden hervorstehende Seitenwand (8) umfasst, wobei der Deckel (3) einen Boden (14) und eine vom Boden hervorstehende abdeckende Schürze (15) umfasst, wobei die Seitenwand (8) und die abdeckende Schürze (15) komplementäre Formen haben und voneinander derart beabstandet sind, dass sie in geschlossener Position des Behälters (1) einen Raum schaffen, in dem eine Dichtung (18) angeordnet ist, wobei die Dichtung (18) eingeklemmt ist, wenn der Behälter (1) zwischen der Seitenwand (8) und der abdeckenden Schürze (15) in geschlossener Position ist, **dadurch gekennzeichnet, dass** die Form und die Abmessungen der Dichtung (18) beim Raum zwischen der Seitenwand (8) und der abdeckenden Schürze (15) äquivalent zur Form und zu den Abmessungen des genannten Raums sind, so dass die Dichtung (18) eine erstreckte Kontaktoberfläche mit wenigstens der abdeckenden Schürze (15) hat.

2. Behälter gemäß Anspruch 1, **dadurch gekennzeichnet, dass** die Dichtung (18) auf der Innenfläche der abdeckenden Schürze (15) angebracht ist und sich deutlich über die gesamte Innenfläche erstreckt.

3. Behälter gemäß Anspruch 1, **dadurch gekennzeichnet, dass** die Dichtung (18) auf der Außenfläche der Seitenwand (8) angebracht ist und sich deutlich über die gesamte Außenfläche (28) eines oberen Abschnitts (25) der genannten Seitenwand erstreckt, wobei sich der genannte Abschnitt deutlich gegenüber der abdeckenden Schürze (15) befindet.

4. Behälter gemäß Anspruch 3, **dadurch gekennzeichnet, dass** der obere Abschnitt (25) eine geringere Dicke als die Dicke der Seitenwand (8) aufweist.

5. Behälter gemäß Anspruch 1 bis 4, **dadurch gekennzeichnet, dass** die oberen und unteren Seiten der Dichtung (18) parallel sind, wobei die genannten oberen und unteren Seiten derart geneigt sind, dass die Außenseite der Dichtung (18) im Verhältnis zur Innenseite der Dichtung (18) nach unten versetzt ist.

6. Behälter (1) gemäß Anspruch 1 bis 5, **dadurch gekennzeichnet, dass** die Dichtung (18) aus elastischerem Plastik ist als das Plastik der Schürze (15), des Bodens (14) und / oder des Napfes (7).

7. Behälter (1) gemäß Anspruch 1 bis 6, **dadurch gekennzeichnet, dass** der Napf (7) und die Schürze (15) eine Rotationsgeometrie haben.

8. Behälter (1) gemäß Anspruch 1 bis 7, **dadurch gekennzeichnet, dass** der Napf (7) Befestigungsmittel am Körper 2 umfasst, wobei die genannten Mittel derart verformbar sind, dass die Zentrierung der abdeckenden Schürze auf dem Napf ermöglicht wird.

9. Behälter (1) gemäß Anspruch 8, **dadurch gekennzeichnet, dass** die Befestigungsmittel sich ab dem Boden des Napfes parallel zur Seitenwand (8) erstreckende, Einrastmittel (9) bildende Vorsprünge umfassen.

10. Behälter (1) gemäß Anspruch 1 bis 9, **dadurch gekennzeichnet, dass** der Napf (7) abnehmbar ist.

11. Behälter (1) gemäß Anspruch 1 bis 10, **dadurch gekennzeichnet, dass** der Körper (2) und der Deckel (3) durch ein Scharnier bildende Mittel artikuliert sind.

12. Behälter (1) gemäß Anspruch 1 bis 11, **dadurch gekennzeichnet, dass** der Deckel (3) darüber hinaus einen Spiegel (20) umfasst.

13. Herstellungsverfahren eines zum Befüllen bereiten Behälters (1) gemäß Anspruch 5 bis 12, wenn dieser von Anspruch 2 abhängt, **dadurch gekennzeichnet, dass** es die folgenden Stufen umfasst:
- Man spritzt Plastik zur Bildung des Bodens (14) und der Schürze (15) des Deckels (3) in eine Form mit einem festen Teil (22) und einem mobilen Teil (23) ein, wobei der mobile Teil (23) zwischen zwei Positionen verschiebbar ist, einer ersten Formposition des Bodens (14) und der Schürze (15) des Deckels (3), in der der mobile Teil (23) den zum Befüllen durch die Dichtung (18) bestimmten Raum einnimmt, und eine Formposition der Dichtung (18), in der der mobile Teil (23) den genannten Raum freigibt:
- man verschiebt den mobilen Teil (23) in seine zweite Position;
- man spritzt das Plastik ein, um die Dichtung (18) zu bilden.

14. Verfahren gemäß Anspruch 13, **dadurch gekennzeichnet, dass** man das Plastik einspritzt, um den Boden (14) und die Schürze (15) des Deckels (3) mithilfe eines ersten Einspritzpunktes zu bilden und man das Plastik einspritzt, um die Dichtung (18) mithilfe eines zweiten Einspritzpunktes (24) zu bilden.

15. Herstellungsverfahren eines zum Befüllen bereiten Behälters (1) gemäß Anspruch 4 bis 12, wenn dieser von Anspruch 3 abhängt, **dadurch gekennzeichnet, dass** es die folgenden Stufen umfasst:
- Man spritzt das Plastik in eine Form mit einem festen Teil und einem mobilen Teil ein, um den Boden und die Seitenwand (8) des Napfes (7) zu bilden, wobei der mobile Teil zwischen zwei Positionen verschiebbar ist, einer ersten Formposition des Bodens und der Seitenwand (B) des Napfes (7), in der der mobile Teil den zum Befüllen durch die Dichtung (18) bestimmten Raum einnimmt, und eine Formposition der Dichtung (18), in der der mobile Teil den genannten Raum freigibt;
- Man verschiebt den mobilen Teil in seiner zweiten Position;
- Man spritzt das Plastik ein, um die Dichtung zu bilden (18).

16. Herstellungsverfahren gemäß Anspruch 15, **dadurch gekennzeichnet, dass** man das Plastik einspritzt, um den Boden und die Seitenwand (8) des Napfes (7) mithilfe eines ersten Einspritzpunktes zu bilden, und man das Plastik einspritzt, um die Dichtung (18) mithilfe eines zweiten Einspritzpunktes zu bilden.

17. Verpackungsbehälter eines insbesondere kosmetischen Produkts mit wenigstens einem flüchtigen und / oder an der Luft veränderlichen Bestandteil, **dadurch gekennzeichnet, dass** er einen zum Befüllen bereiten Behälter (1) gemäß Anspruch 1 bis 12 und ein im Napf (7) untergebrachtes Produkt umfasst.

18. Herstellungsverfahren eines Verpackungsbehälters eines insbesondere kosmetischen Produkts gemäß Anspruch 17, **dadurch gekennzeichnet, dass** es die folgenden Stufen umfasst:
- Man beschafft sich einen zum Befüllen bereiten Behälter gemäß Anspruch 1 bis 12;
- Man gießt das Produkt in den Napf.

19. Verfahren gemäß Anspruch 18, **dadurch gekennzeichnet, dass** es darüber hinaus die Stufe umfasst, die darin besteht, den Behälter in die geschlossene Position zu bringen.

## Claims

1. A ready to be filled container (1) intended for packaging a product, in particular cosmetic, comprising at least one constituent that is volatile and/or spoils in air, the container (1) comprising a base body (2) and a lid (3) made from plastics material, the container (1) being able to be in the closed position when the lid (3) covers the body (2) or in the open position, the body (2) comprising at least a jar (7) intended to receive the product, the jar (7) comprising a base and a lateral wall (8) projecting from the base, the lid (3) comprising a base (14) and a covering skirt (15) projecting from the base, the lateral wall (8) and the covering skirt (15) having complementary shapes and being separated from each other so as, in the closed position of the container (1), to create a space in which a seal (18) is disposed, the seal (18) being gripped, when the container (1) is in the closed position, between the lateral wall (8) and the covering skirt (15), **characterised in that** the shape and dimensions of the seal (18) are, at the space between the lateral wall (8) and the covering skirt (15), equivalent to the shape and dimensions of the said space so that the seal (18) has an extensive surface of contact with at least the covering skirt (15).

2. A container according to claim 1, **characterised in that** the seal (18) is mounted on the internal surface of the covering skirt (15), extending substantially over the entire said internal surface.

3. A container according to claim 1, **characterised in that** the seal (18) is mounted on the external surface of the lateral wall (8), extending substantially over the entire external surface (28) of a top portion (25) of the said lateral wall, the said portion being substantially opposite the covering skirt (15).

4. A container according to claim 3, **characterised in that** the top portion (25) has a thickness less than the thickness of the lateral wall (8).

5. A container according to any one of claims 1 to 4, **characterised in that** the top and bottom faces of the seal (18) are parallel, the said top and bottom faces being inclined so that the external face of the seal (18) is offset downwards with respect to the internal face of the seal (18).

6. A container (1) according to any one of claims 1 to 5, **characterised in that** the seal (18) is made from plastics material more flexible than the plastics material of the skirt (15), of the base (14) and/or of the jar (7).

7. A container (1) according to any one of claims 1 to 6, **characterised in that** the jar (7) and the skirt (15) have a geometry of revolution.

8. A container (1) according to any one of claims 1 to 7, **characterised in that** the jar (7) comprises means of fixing to the body (2), the said means being deformable so as to allow the centring of the covering skirt on the jar.

9. A container (1) according to claim 8, **characterised in that** the fixing means comprise projections extending from the base of the jar parallel to the lateral wall (8), forming a snapping-on means (9).

10. A container (1) according to any one of claims 1 to 9, **characterised in that** the jar (7) is removable.

11. A container (1) according to any one of claims 1 to 10, **characterised in that** the body (2) and lid (3) are articulated by means forming a hinge.

12. A container (1) according to any one of claims 1 to 11, **characterised in that** the lid (3) also comprises a mirror (20).

13. A method of producing a ready to be filled container (1) according to any one of claims 5 to 12 when it depends on claim 2, **characterised in that** it comprises the following steps:
- the plastics material is injected in order to form the base (14) and the skirt (15) of the lid (3), in a mould comprising a fixed part (22) and a moving part (23), the moving part (23) being able to be moved between two positions, a first position of moulding the base (14) and the skirt (15) of the lid (3) in which the moving part (23) occupies the space intended to be filled by the seal (18) and a position of moulding the seal (18) in which the moving part (23) leaves clear the said space;
- the moving part (23) is moved into its second position;
- the plastics material is injected in order to form the seal (18).

14. A method according to claim 13, **characterised in that** the plastics material is injected in order to form the base (14) and the skirt (15) of the lid (3) using a first injection point and the plastics material is injected to form the seal (18) using a second injection point (24).

15. A method of producing a ready to be filled container (1) according to any one of claims 4 to 12 when it depends on claim 3, **characterised in that** it comprises the following steps:
- the plastics material is injected in order to form the base and the lateral wall (8) of the jar (7), in a mould comprising a fixed part and a moving part, the moving part being able to be moved between two positions, a first position of moulding the bottom and the lateral wall (8) of the jar (7) in which the moving part occupies the space intended to filled by the seal (18) and a position of moulding the seal (18) in which the moving part leaves clear the said space;
- the moving part is moved into its second position;
- the plastics material is injected in order to form the seal (18).

16. A method according to claim 15, **characterised in that** the plastics material is injected in order to form the base and lateral wall (8) of the jar (7) using a first injection point and the plastics material is injected in order to form the seal (18) by means of a second injection point.

17. A container for packaging a product, in particular cosmetic, comprising at least one constituent that is volatile and/or spoils in air, **characterised in that** it comprises a ready to be filled container (1) according to one of claims 1 to 12 and a product disposed in the jar (7).

18. A method of producing a containing for packaging a product, in particular cosmetic, according to claim 17, **characterised in that** it comprises the following steps:
- a ready to be filled container according to one of claims 1 to 12 is procured;
- the product is poured into the jar.

19. A method according to claim 18, **characterised in that** it also comprises the step consisting of putting the container in the closed position.
